(19) Europäisches Patentamt
European Patent Office
Office européen des brevets

(11) EP 0 781 804 A2

(12) EUROPEAN PATENT APPLICATION

(43) Date of publication:
**02.07.1997 Bulletin 1997/27**

(51) Int. Cl.$^6$: **C08K 5/5333**, C08L 33/08

(21) Application number: **96115478.8**

(22) Date of filing: **26.09.1996**

(84) Designated Contracting States:
**DE FR GB**

(30) Priority: **26.12.1995 JP 339658/95**

(71) Applicant: **KAO CORPORATION**
**Chuo-ku, Tokyo (JP)**

(72) Inventors:
- **Watanabe, Yoshihiko, c/o Kao Corp. Wakayama-shi, Wakayama-ken (JP)**
- **Tsuji, Makoto, c/o Kao Corp. Wakayama-shi, Wakayama-ken (JP)**
- **Hosokawa, Yasunori, c/o Kao Corp. Wakayama-shi, Wakayama-ken (JP)**
- **Ina, Yoshimitsu, c/o Kao Corp. Wakayama-shi, Wakayama-ken (JP)**

(74) Representative: **Grünecker, Kinkeldey, Stockmair & Schwanhäusser**
**Anwaltssozietät**
**Maximilianstrasse 58**
**80538 München (DE)**

(54) **Super absorbent polymer composition**

(57) The super absorbent polymer composition of the present invention comprises a super absorbent polymer and a diphosphonic acid represented by the following general formula (I):

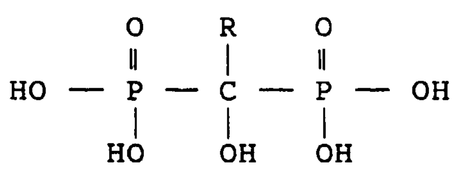

(I)

wherein R represents a saturated or unsaturated hydrocarbon group having 5 to 23 carbon atoms, or a salt thereof.

EP 0 781 804 A2

## Description

BACKGROUND OF THE INVENTION

[Field of the Invention]

The present invention relates to a super absorbent polymer composition wherein the super absorbent polymer is not degraded/deteriorated even in a water-containing state as a result of absorption of an aqueous liquid, or body fluids such as urine, blood and perspiration.

[Description of the Related Art]

Super absorbent resins have widely been used, in the field of sanitary supplies, as absorbent materials in absorbent articles, such as paper diapers (disposable diapers) for babies, adults, or those suffering from urinary incontinence, and sanitary napkins for women, in the field of agriculture and horticulture, for example, as water-retaining agents, and in the field of civil engineering works, for example, as sludge coagulants, moisture condensation preventive agents, and water-stopping agents. It is known that water-soluble polymers (crosslinked polymers) constituting such super absorbent resins undergo molecular weight reduction (degradation) and deterioration with time in the presence of a radical generating species, such as hydrogen peroxide or L-ascorbic acid or a salt thereof. Because L-ascorbic acid or a salt thereof is present in body fluids, such as urine, blood, and perspiration, it has been a serious problem that a super absorbent resin, when used in an absorbent member of disposable diapers or sanitary napkins, undergoes deterioration, degradation, and reduction in body fluid retentive capacity with time due to the radicals generated from L-ascorbic acid (or a salt thereof).

Further, the above degradation reaction of the water-soluble polymer due to radical generating species is evident in the state wherein body fluids such as urine, blood and perspiration are absorbed (hereinafter referred to as the water-containing condition), and particularly evident in the presence of transition metal ions having an oxidation number of two or more, such as iron ions and copper ions in an air atmosphere.

This is because traces of transition metal ions, such as iron or copper, serve as catalysts to markedly accelerate decomposition and the radical generation reaction of hydrogen peroxide or L-ascorbic acid or a salt thereof. See J. Am. Chem. Soc., Vol. 89, No. 16, p. 4176 (1967) and Free Radical Research Communications, 1, 349 (1986)).

Although in some cases such transition metal ions are added intentionally or as a third component under conditions where a super absorbent polymer and a radical generating species, such as hydrogen peroxide or L-ascorbic acid or a salt thereof or the like, are present, in other cases, it is known that such transition metal ions have enough catalytic ability capable of decomposing the polymer chain of the water-soluble polymer that constitutes the super absorbent polymer with time (see, for example, Carbohydrate Research, 4, 63 (1967).

Means that have been widely employed for suppressing degradation and deterioration of super absorbent polymers include (1) sealing of a super absorbent polymer under reduced pressure or in a nitrogen atmosphere to avoid contact with air (especially with oxygen), (2) use of highly purified water and reagents to inhibit incorporation of metal ions into a super absorbent polymer, (3) addition of an antioxidant or a reducing agent to a super absorbent polymer, (4) addition of a protein or an enzyme to a super absorbent polymer, and (5) addition of a metal chelating agent, such as citric acid, (poly)phosphoric acid or salts thereof, or ethylenediaminetetraacetic acid (EDTA) or salts thereof, to a super absorbent polymer. In many cases, however, means (1) and (2) are impossible to carry out for some end uses of a super absorbent polymer. Means (3), (4) and (5) including addition of a known additive to suppress decomposition and deterioration of a super absorbent polymer are not always sufficiently effective. Cases are often met with in which the additive must be added in a large quantity or an additive having a very strong action must be used. Under such a situation, it is likely that the inherent physical properties or performances of super absorbent polymers may be seriously impaired and some additives can result in circumstances which are hygienically unpreferable in view of the working atmosphere because, for example, they give off offensive odor or are poor in stability.

In fact, the dispersion or mixing of a metal chelating agent into a super absorbent polymer is described in Japanese Patent Application Laid-Opens 56-89838, 59-230046, and 1-275661, wherein it is disclosed that, for example, the use of EDTA, sodium tripolyphosphate, and the like does not lower the ability of absorbing water even in the case of water containing salts, ions, and the like. Japanese Patent Application Laid-Open 5-86251 discloses that when 1-hydroxyethylidene-1,1'-diphosphonic acid (having the below-mentioned formula (I) wherein R represents an alkyl group having one carbon atom) is added to a super absorbent polymer, the super absorbent polymer is not colored with time even if the super absorbent polymer is stored for a long period of time under high temperatures and high humidity. However, according to a study by the present inventors, it has been disclosed that the use of EDTA, sodium tripolyphosphate, or a diphosphonic acid having the below-mentioned general formula (I) wherein the number of carbon atoms of R is small or a salt thereof, does not have a great effect on the stability of the super absorbent resins in the presence of moisture or an aqueous solution containing a radical generating species, such as hydrogen peroxide, L-ascorbic acid or a salt

thereof.

## SUMMARY OF THE INVENTION

Therefore, one object of the present invention is to provide a super absorbent polymer composition having excellent water absorbability wherein the super absorbent polymer is stably present free from degradation or deterioration even in the presence of moisture or an aqueous solution containing radical generating species, such as hydrogen peroxide or L-ascorbic acid or a salt thereof, and transition metal ions, such as iron ions and copper ions (hereinafter the effect of this stability being referred to as "the stabilizing effect of the present invention").

As a result of extensive investigation, the present inventors have found that the above object can be attained by the use of a combination of a super absorbent polymer, and a specific diphosphonic acid or a salt thereof.

The present invention has be made on the basis of the above finding and provides a super absorbent polymer composition comprising a super absorbent polymer and a diphosphonic acid represented by the following general formula (I):

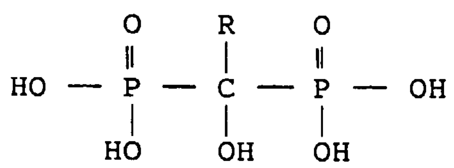

(I)

wherein R represents a saturated or unsaturated hydrocarbon group having 5 to 23 carbon atoms, or a salt thereof.

Though it will vary depending on the type of super absorbent polymer used, the super absorbent polymer composition of the present invention is effective when used in combination with a food additive or a cosmetic that contains a radical generating species, such as L-ascorbic acid, or a salt thereof, and it is also effectively used as a absorbent material in sanitary articles. In particular, the super absorbent polymer composition of the present invention is preferably used as a absorbent material in sanitary articles.

The super absorbent polymer composition of the present invention has excellent water absorbability. In addition, in the super absorbent polymer composition of the present invention, the super absorbent polymer is stably present free from degradation or deterioration even in the presence of moisture, or an aqueous solution containing a radical generating species, such as hydrogen peroxide, L-ascorbic acid or a salt, and transition metal ions, such as iron ions and copper ions.

## DETAILED DESCRIPTION OF THE INVENTION

Now, the super absorbent polymer composition of the present invention will be described in detail.

The super absorbent polymer used in the resent invention is not particularly restricted and includes, for example, a partially crosslinked polymer having carboxyl groups or salts thereof, such as a crosslinked polyacrylate, a vinyl alcohol-acrylate copolymer (crosslinked polymer), an acrylate-grafted starch copolymer (crosslinked polymer), and a graft polymer having blocks of polyvinylalcohol and salt of polymaleic anhydride (crosslinked polymer), and a partially crosslinked polysaccharide such as a crosslinked carboxymethylcellulose salt. In view of water absorbability, a crosslinked polyacrylate or an acrylate-grafted starch copolymer (crosslinked polymer) is preferably used, and in particular a crosslinked polyacrylate is most preferably used.

The above super absorbent resins may be used alone or in the form of a combination of two or more.

Further, as "the salt" that constitutes various super absorbent resins can be mentioned, for example, an alkali metal salt (e.g., a sodium salt, a potassium salt, and a lithium salt), an alkali earth metal salt (e.g., a potassium salt, a magnesium salt, and a barium salt), and an ammonium salt (e.g., a quaternary ammonium salt and a quaternary alkyl ammonium salt).

The degree of neutralization of the above super absorbent polymer is preferably 0.01 to 100 %, more preferably 1 to 99 %, and particularly preferably 40 to 95 % based on the number of mols in the above super absorbent polymer.

In the present invention, the term "degree of neutralization" means the amount of the acid groups in the above super absorbent polymer that constitutes salts out of all the acid groups in the above super absorbent polymer (in terms of mol), i.e., (the number of mols of the acid groups constituting salts)/(the number of mols of acid groups constituting salts and free acid groups capable of constituting salts) x 100 (%) .

The diphosphonic acid represented by the above general formula (I) and its acid used in the present invention acts as a chelating agent.

In the diphosphonic acid represented by the above general formula (I) or a salt thereof, R in the formula represents a saturated or unsaturated hydrocarbon group having 5 to 23 carbon atoms.

Herein when the number of carbon atoms is less than 5, the stabilizing effect of the present invention (the stabilization of super absorbent resins) is unsatisfactory, whereas when the number of carbon atoms is more than 23, the solubility in a solvent such as water becomes conspicuously poor.

As the above saturated hydrocarbon group, for example, a straight-chain or branched-chain alkyl group or a cycloalkyl group can be mentioned. The alkyl group or the cycloalkyl group may be substituted by saturated hydrocarbon groups such as alkyl and cycloalkyl groups.

As the above unsaturated hydrocarbon group, for example, a straight-chain or branched-chain alkenyl group or an aryl group can mentioned. The alkenyl or aryl group may be substituted by saturated hydrocarbon groups such as alkyl and cycloalkyl groups or substituted by unsaturated hydrocarbon groups such as alkenyl and aryl groups. In addition, an arylalkyl group can be used as the unsaturated hydrocarbon group.

Particularly, as to the above R, a saturated hydrocarbon group having 5 to 23 carbon atoms is preferable and in view of the stabilizing effect of the present invention and the solubility in a solvent such as water. A straight-chain or branched-chain alkyl group having 7 to 19 carbon atoms is further preferable, with particular preference given to a straight-chain or branched-chain alkyl group having 11 to 17 carbon atoms.

Further, in the present specification, the above cycloalkyl group means both a cycloalkyl group and a cycloalkyl group substituted by a saturated hydrocarbon group, and for example, a cyclopentyl group, a cyclohexyl group, and a methylcyclohexyl group can be mentioned. In the present specification, the above aryl group means both an aryl group and an aryl group substituted by unsaturated or saturated hydrocarbon group, and for example, a phenyl group, a tolyl group, a xylyl group, and a naphthyl group can be mentioned.

As "the salt" constituting the salt of the above diphosphonic acid, for example, an alkali metal salt, an ammonium salt, and an amine salt can be mentioned.

Herein, as the above alkali metal salt, for example, a sodium salt and a potassium salt can be mentioned, as the above ammonium salt, for example, $NH_4^+$ and $NR^1{}_4^+$ (wherein $R^1$ represents an alkyl group or an alkenyl group having 1 to 22 carbon atoms that may have a hydroxyl group) can be mentioned, and as the above amine salt, for example, $NHR^1{}_3^+$, $NH_2R^1{}_2^+$, and $RNH_2R^{1+}$ (wherein $R^1$ has the same meaning as that in the above ammonium salt and R has the same meaning as that in the above general formula (I)) can be mentioned.

The above diphosphonic acids and salts thereof may be used alone or in the form of a combination of two or more.

The content of the above diphosphonic acid or a salt thereof is preferably 0.0001 to 30 parts by weight, more preferably 0.001 to 10 parts by weight, and particularly preferably 0.01 to 5 parts by weight, to 100 parts by weight of the super absorbent polymer. If the above content is less then 0.0001 part by weight, the effect of the addition is not obtained whereas if the above content is more than 30 parts by weight, the effect is not improved and the physical properties or the like of the super absorbent polymer are liable to be damaged, so that the above content is preferably within the above range.

Further, in the present invention, in all cases, by "the super absorbent polymer" on which contents are based, is meant one that has not yet absorbed water, that is, one that is in the dry state.

The super absorbent polymer composition of the present invention may contain water, in addition to the above super absorbent polymer, and the above diphosphonic acid or a salt thereof. In this case, the above super absorbent polymer may be a hydrous polymer, that is, a super absorbent polymer that is in a water-containing condition or the composition of the present invention may be in the state of a hydrous gel. The super absorbent polymer composition of the present invention may be made into an aqueous composition, such as an aqueous dispersion/emulsion, for example, by dispersing and mixing the above super absorbent polymer and the above diphosphonic acid or a salt thereof into water so that they may be contained in the water.

In the case where the super absorbent polymer composition of the present invention contains water, the amount of water present can be any amount up to saturation of the super absorbent polymer.

Further, various additives, such as a water-soluble organic solvent, a surface-active agent, salts, a stabilizer, an antioxidant and/or a preservative can be added to the super absorbent polymer composition of the present invention.

Although the state of the super absorbent polymer composition of the present invention is not particularly restricted and may take any state as long as the above super absorbent polymer and the above diphosphonic acid or a salt thereof are contained, in particular it is preferable that the super absorbent polymer composition of the present invention takes the state of an aqueous dispersion/emulsion of the above super absorbent polymer and the above diphosphonic acid or a salt thereof, the state of a mixed system wherein the above super absorbent polymer and the above diphosphonic acid or a salt thereof are dispersed and mixed in the solid state, or the state wherein the above diphosphonic acid or a salt thereof is impregnated into the above super absorbent polymer. Particularly the state wherein the above diphosphonic acid or a salt thereof is impregnated into the above super absorbent polymer is preferred.

As the method of preparing the super absorbent polymer composition of the present invention, for example, the methods set forth below under 1 to 6 are mentioned:

1. A method wherein the above super absorbent polymer and the above diphosphonic acid or a salt thereof in their solid state are ground and mixed together.

2. A method wherein an aqueous solution of the above diphosphonic acid or a salt thereof or an aqueous dispersion of the above diphosphonic acid or a salt thereof is impregnated into the above super absorbent polymer, followed by drying.

3. A method wherein a solution of the above diphosphonic acid or a salt thereof in a hydrophilic organic solvent is impregnated into the above super absorbent polymer, followed by drying.

4. A method wherein the above super absorbent polymer is coated with an aqueous solution of the above diphosphonic acid or a salt thereof or a solution of the above diphosphonic acid or a salt thereof in an organic solvent, followed by drying.

5. A method wherein the above diphosphonic acid of a salt thereof is heated and melted and is coated on the above super absorbent polymer, followed by cooling.

6. A method wherein the above super absorbent polymer and the above diphosphonic acid or a salt thereof are mixed in water and the mixture is used as it is.

As described above, the super absorbent polymer composition of the present invention is particularly useful as a absorbent material in sanitary articles which are absorbent articles such as paper diapers and sanitary napkins. Such absorbent articles comprise a water-permeable topsheet, a water-impermeable backsheet, and an absorbent member interposed between the water-permeable topsheet and the water-impermeable backsheet. Such an absorbent member may be made of fluff pulp obtained by grinding wood pulp. The super absorbent polymer composition of the present invention is used in combination with the above fluff pulp and in this case the super absorbent polymer composition may be mixed with the above fluff pulp or may be allowed to be present in a layer at any part of the above fluff pulp. The above absorbent member may also be made of a heat-treated mixture of a thermoplastic polymer, fluff pulp, and the super absorbent polymer composition of the present invention.

As described above, since body fluids such as urine contains L-ascorbic acid or a salt thereof, the super absorbent polymer in the conventionally known super absorbent polymer composition are deteriorated, which is caused by such a substance in the absorbent article that has absorbed the body fluid. In contrast, when use is made of the super absorbent polymer composition of the present invention that is used as a absorbent material in an absorbent article, the deterioration of the super absorbent polymer is suppressed.

In the case wherein the super absorbent polymer composition of the present invention is used in an absorbent article such as in paper diapers and sanitary napkins, one can wear such an absorbent article for a longer time free from care at night or the like, because deterioration of the super absorbent polymer hardly takes place and body fluids do not back out of the absorbent article.

Now, the present invention will be further described in more detail by reference to Examples and Comparative Examples below, but the present invention is not limited to them. Parenthetically, unless otherwise specified, "%" in the following Examples and Comparative Examples represents "% by weight."

First the testing method and the evaluation method in the Examples and Comparative Examples are given below.

1. Water Absorption

The super absorbent polymer composition was dispersed in a large excess amount of a physiological saline (a 0.9 % salt solution), and after the super absorbent polymer composition had been swelled until the water absorption was brought to an equilibrium state, the physiological saline was filtered through a 80-mesh metal gauze, the thus obtained swelled weight w was measured, and the value obtained by dividing the value of the swelled weight w by the value of the weight $w_0$ before the absorption of water, that is, $w/w_0$, was designated as the water absorption.

2. Rate of Water Absorption

The rate of water absorption was expressed in terms of the amount of a physiological saline in ml absorbed in 1 min by 0.3 g of the super absorbent polymer composition.

3. Stability of the Swelled Gel (I)

1 g of the super absorbent polymer composition was swelled with 45 g of a physiological saline containing 0.05 % of L-ascorbic acid and was placed in a screw tube, the tube was placed in a bath having a constant temperature of 40 °C, and after 3 hours the state of the gel was observed. The stability evaluation was rated according to the following 4 steps:

Excellent: the swelled particles had no fluidity and no stringiness and their shapes remained.
Good: the swelled particles had a little fluidity and a little stringiness but their shapes remained.
Fair: the swelled particles were not dissolved but had fluidity and stringiness and their shapes became indefinite.

Poor: parts of the swelled particles were dissolved to become liquid and more than half of the particles became shapeless.

In this evaluation, the evaluations "Excellent" and "Good" indicate that the super absorbent polymer composition is preferable as a absorbent material to be used, for example, for paper diapers, sanitary napkins, sheets for adults, tampons, and sanitary cotton.

4. Stability of the Swelled Gel (II)

Stability of the swelled gel was evaluated in the same way as in Stability of the Swelled Gel (I) (3 above), except that, instead of the physiological saline containing 0.05 % of L-ascorbic acid, urine from adults were used. The urines were used within 30 min after they were taken. Since urine differs from person to person, which leads to a fear that the evaluation becomes different, at least three urines from three persons were used for the evaluation and the evaluation was based on the average of the results.

Now, Synthetic Examples of super absorbent resins used in the Examples and Comparative Examples are shown below.

Synthetic Example 1 [Synthesis of Super Absorbent Resins (I) and (II)]

After 72.1 g of acrylic acid were diluted with 18.0 g of water and were neutralized with 98.9 g of a 30 % aqueous sodium hydroxide solution with cooling, 10.7 g of a 2.8 % aqueous potassium persulfate solution as an initiator and 1 g of a 0.36 % aqueous epoxy type crosslinking agent (the epoxy type crosslinking agent being a polyglycerol polyglycidyl ether manufactured by Nagase Kasei Kogyo K.K. available under the trade name of "Denacole EX-512") were added and they were made into a uniform solution, thereby obtaining a monomer/initiator solution. Separately, 283 ml of cyclohexane was placed in a 500-ml flask equipped with a reflux condenser, a dropping funnel, a stirring rod, and a nitrogen introduction tube, then 0.87 g of a 25 % aqueous solution of sodium salt of polyoxyethylene lauryl ether sulfuric acid ester (the average number of the added ethylene oxide molecules = 2) was stirred (300 rpm) and dispersed thereinto, and after the inside of the flask was replaced with nitrogen, the temperature of the bath was elevated to 75 °C. To this was added dropwise the above aqueous monomer/initiator solution over 60 min. After the addition of the aqueous monomer/initiator solution was completed, the mixture was heated and stirred at 75 °C for 30 min. The water-containing super absorbent polymer dispersed in this solvent was named Super Absorbent Polymer (I).

Thereafter, the bath temperature was brought to 80 °C and the stirring and mixing were continued for 2 hours. Only water was continuously removed outside the system from the azeotropic reflux, so that the water content of the super absorbent polymer was adjusted to 30 parts by weight or less per 100 parts by weight of the super absorbent polymer (dried). After the completion of the polymerization, the product was separated and was dried under reduced pressure to obtain partially crosslinked acrylic acid (sodium salt) polymer particles having indefinite shapes in the form of a granular gel, which was named Super Absorbent Polymer (II).

Synthetic Example 2 [Synthesis of Super Absorbent Polymer (III)]

After 72.1 g of acrylic acid were diluted with 18.0 g of water and were neutralized with 98.9 g of a 30 % aqueous sodium hydroxide solution with cooling, 5.4 g of a 1.3 % aqueous solution of 2,2'-azobis(2-aminodipropane) dihydrochloride salt as an initiator was added and they were made into a uniform solution, thereby obtaining a monomer/initiator solution. Separately, 283 ml of cyclohexane was placed in a 500-ml flask equipped with a reflux condenser, a dropping funnel, a stirring rod, and a nitrogen introduction tube, then 0.87 g of a 25 wt. % aqueous solution of sodium salt of polyoxyethylene lauryl ether sulfuric acid ester (the average number of the added ethylene oxide molecules = 2) was stirred (300 rpm) and dispersed thereinto, and after the inside of the flask was replaced with nitrogen, the temperature of the bath was elevated to 75 °C. To this was added dropwise the above aqueous monomer/initiator solution over 60 min. After the addition of the aqueous monomer/initiator solution was completed, the mixture was heated and stirred at 75 °C for 30 min, then the bath temperature was brought to 80 °C and the stirring and mixing were continued for 2 hours. Only water was continuously removed outside the system from the azeotropic reflux, so that the water content of the super absorbent polymer was adjusted to 30 parts by weight or less per 100 parts by weight of the super absorbent polymer (dried). 1.8 g of an 1.55 % aqueous epoxy type crosslinking agent (the epoxy type crosslinking agent being a polyglycerol polyglycidyl ether manufactured by Nagase Kasei Kogyo K.K. available under the trade name of "Denacole EX-512") was added to this cyclohexane dispersion containing the dispersed water-containing super absorbent polymer over 5 min and after the reaction was carried out for 2 hours, the reaction product was separated and was dried under reduced pressure to obtain partially crosslinked acrylic acid (sodium salt) polymer particles having indefinite shapes in the form of a granular gel, which was named Super Absorbent Polymer (III).

[Examples 1 and 2]

100 g of Super Absorbent Polymer (I) (the amount being in terms of the dried product) were placed in a double arm kneader, then 100 g of a solution containing 0.1 % of 1-hydroxydodecylidene-1,1'-diphosphonic acid (having the above formula (I) wherein R represents an alkyl group having 11 carbon atoms, which is hereinafter referred to "R = a C11 alkyl group" and so on) in ethanol (Example 1) or 100 g of a 0.1 % aqueous 1-hydroxyhexadecylidene-1,1'-diphosphonic acid tetrasodium salt (R = a C15 alkyl group) dispersion (Example 2) was added thereto with stirring, and they were stirred and mixed well. Thereafter the mixture was dried under reduced pressure. With respect to the thus obtained super absorbent polymer compositions, the water absorption, the rate of water absorption, and the stability of the swelled gel [(I) and (II)] were evaluated. Their results are shown in Table 1 below. In addition, in Table 1, the added amount of the used chelating agent (in terms of the weight proportion to the super absorbent polymer in the dried state) is also shown (the same being applied hereinafter).

[Examples 3 to 12]

100 g of Super Absorbent Polymer (II) (the amount being in terms of the dried product) were placed in a double arm kneader, then 100 g of a solution containing 1 %, 0.1 %, or 0.01 % of 1-hydroxyhexadecylidene-1,1'-diphosphonic acid (R = a C15 alkyl group) in ethanol (Examples 3 to 5), 100 g of a 1 %, 0.1 %, or 0.01 % aqueous 1-hydroxyhexadecylidene-1,1'-diphosphonic acid tetrasodium salt (R = a C15 alkyl group) dispersion (Examples 6 to 8), 100 g of a 1 % or 0.1 % aqueous 1-hydroxyoctadecylidene-1,1'-diphosphonic acid disodium salt (R = a C17 alkyl group) dispersion (Examples 9 and 10), or 100 g of a 1% or 0.1 % aqueous 1-hydroxyoctadecylidene-1,1'-diphosphonic acid tetrasodium salt (R = a C17 alkyl group) (Examples 11 and 12) was added thereto with stirring, and they were stirred and mixed well. Thereafter, the mixture was dried under reduced pressure. With respect to the thus obtained super absorbent polymer compositions, the water absorption, the rate of water absorption, and the stability of the swelled gel [(I) and (II)] were evaluated. Their results are shown in Table 1 below.

[Examples 13 to 22]

The procedure of Examples 3 to 12 was repeated, except that instead of Super Absorbent Polymer (II), Super Absorbent Polymer (III) was used, thereby producing super absorbent polymer compositions, and they were evaluated similarly. Their results are shown in Table 1 below.

[Examples 23 and 24]

100 g of Super Absorbent Polymer (II) (the amount being in terms of the dried product) were placed in a double arm kneader, then 1 g or 0.1 g of 1-hydroxyhexadecylidene-1,1'-diphosphonic acid tetrasodium salt (R = a C15 alkyl group) (Examples 23 and 24) was added thereto with stirring, and they were stirred and mixed well. With respect to the thus obtained super absorbent polymer compositions, the water absorption, the rate of water absorption, and the stability of the swelled gel [(I) and (II)] were evaluated. Their results are shown in Table 1 below.

[Examples 25 and 26]

100 g of Super Absorbent Polymer (II) (the amount being in terms of the dried product) were placed in a double arm kneader, then 100 g of a 0. 1 % aqueous 1-hydroxyoctadecylidene-1,1'-diphosphonic acid dipotassium salt (R = a C17 alkyl group) dispersion (Example 25) or 100 g of a 0. 1 % aqueous 1-hydroxyoctadecylidene-1,1'-diphosphonic acid tetrapotassium salt (R = a C17 alkyl group) dispersion (Example 26) was added thereto with stirring, and they were stirred and mixed well. Thereafter the mixture was dried under reduced pressure. With respect to the thus obtained super absorbent polymer compositions, the water absorption, the rate of water absorption, and the stability of the swelled gel [(I) and (II)] were evaluated. Their results are shown in Table 1 below.

[Example 27]

100 g of Super Absorbent Polymer (II) (the amount being in terms of the dried product) were placed in a double arm kneader, then 100 g of a solution containing 0.1 % of 1-hydroxyoctadecylidene-1,1'-diphosphonic acid ditriethanolamine salt (R = a C17 alkyl group) in ethanol was added thereto with stirring, and they were stirred and mixed well. Thereafter the mixture was dried under reduced pressure. With respect to the thus obtained super absorbent polymer composition, the water absorption, the rate of water absorption, and the stability of the swelled gel [(I) and (II)] were evaluated. Their results are shown in Table 1 below.

[Comparative Examples 1 to 3]

100 g of Super Absorbent Polymer (I) (the amount being in terms of the dried product) were placed in a double arm kneader, then 100 g of a 10 % aqueous ethylenediaminetetraacetic acid (EDTA) tetrasodium salt solution (Comparative Example 1), a 10 % aqueous sodium tripolyphosphate solution (Comparative Example 2), or a 10 % aqueous 1-hydroxyethylidene-1,1'-diphosphonic acid (R = Cl alkyl group) solution (Comparative Example 3) were added thereto with stirring, and they were stirred and mixed well. Thereafter the mixture was dried under reduced pressure. With respect to the thus obtained super absorbent polymer compositions, the water absorption, the rate of water absorption, and the stability of the swelled gel [(I) and (II)] were evaluated. Their results are shown in Table 2 below. In addition, in Table 2, the added amount of the used chelating agent (in terms of the weight proportion to the super absorbent polymer in the dried state) is also shown (the same being applied hereinafter).

[Comparative Example 4]

Similarly to the method of Example 1, Super Absorbent Polymer (II) obtained in Synthetic Example 1 was evaluated. Their results are shown in Table 2.

[Comparative Example 5]

Similarly to the method of Example 1, Super Absorbent Polymer (III) obtained in Synthetic Example 2 was evaluated. Their results are shown in Table 2.

Table 1

| | | Added amount of chelating agent (wt% based on the polymer) | Water absorption (g/g) | Rate of water absorption (mℓ/0.3g·min) | Stability of swelled gel | |
|---|---|---|---|---|---|---|
| | | | | | (I) | (II) |
| Examples | 1 | 0.1 | 63 | 1.0 | Good | Good |
| | 2 | 0.1 | 64 | 0.9 | Good | Good |
| | 3 | 1.0 | 65 | 0.8 | Excellent | Excellent |
| | 4 | 0.1 | 65 | 0.9 | Excellent | Excellent |
| | 5 | 0.01 | 64 | 0.9 | Good | Good |
| | 6 | 1.0 | 67 | 0.8 | Excellent | Excellent |
| | 7 | 0.1 | 65 | 0.9 | Excellent | Excellent |
| | 8 | 0.01 | 65 | 0.9 | Good | Good |
| | 9 | 1.0 | 64 | 0.9 | Excellent | Excellent |
| | 10 | 0.1 | 64 | 0.8 | Good | Good |
| | 11 | 1.0 | 64 | 1.0 | Excellent | Excellent |
| | 12 | 0.1 | 65 | 0.9 | Good | Good |
| | 13 | 1.0 | 64 | 2.8 | Excellent | Excellent |
| | 14 | 0.1 | 64 | 3.0 | Good | Excellent |
| | 15 | 0.01 | 62 | 3.1 | Good | Good |
| | 16 | 1.0 | 63 | 2.9 | Excellent | Excellent |
| | 17 | 0.1 | 63 | 2.9 | Good | Good |
| | 18 | 0.01 | 61 | 3.0 | Good | Good |
| | 19 | 1.0 | 63 | 2.9 | Excellent | Excellent |
| | 20 | 0.1 | 64 | 2.8 | Good | Good |
| | 21 | 1.0 | 63 | 3.0 | Excellent | Excellent |
| | 22 | 0.1 | 63 | 2.8 | Good | Good |
| | 23 | 1.0 | 65 | 0.9 | Good | Excellent |
| | 24 | 0.1 | 66 | 0.9 | Good | Good |
| | 25 | 0.1 | 65 | 0.9 | Good | Good |
| | 26 | 0.1 | 65 | 0.9 | Good | Good |
| | 27 | 0.1 | 67 | 1.0 | Good | Good |

Table 2

| | | Added amount of chelating agent (wt% based on the polymer) | Water absorption (g/g) | Rate of water absorption (mℓ/0.3g·min) | Stability of swelled gel | |
|---|---|---|---|---|---|---|
| | | | | | (I) | (II) |
| Comparative Examples | 1 | 10 | 66 | 0.7 | Poor | Poor |
| | 2 | 10 | 64 | 1.0 | Poor | Fair |
| | 3 | 10 | 65 | 1.0 | Fair | Fair |
| | 4 | 0 | 65 | 0.9 | Poor | Poor |
| | 5 | 0 | 63 | 3.0 | Poor | Poor |

## Claims

1. A super absorbent polymer composition, comprising a super absorbent polymer and a diphosphonic acid represented by the following general formula (I):

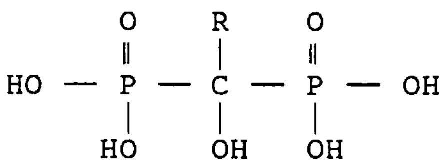

(I)

wherein R represents a saturated or unsaturated hydrocarbon group having 5 to 23 carbon atoms, or a salt thereof.

2. The super absorbent polymer composition according to claim 1, wherein said saturated hydrocarbon group is a straight-chain or branched-chain alkyl group or a cycloalkyl group and said unsaturated hydrocarbon group is a straight-chain or branched-chain alkenyl group or an aryl group.

3. The super absorbent polymer composition according to claim 2, wherein said saturated hydrocarbon group is a straight-chain or branched-chain alkyl group having 7 to 19 carbon atoms.

4. The super absorbent polymer composition according to claim 3, wherein said saturated hydrocarbon group is a straight-chain or branched-chain alkyl group having 11 to 17 carbon atoms.

5. The super absorbent polymer composition according to claim 1, wherein the amount of said diphosphonic acid or a salt thereof is 0.0001 to 30 parts by weight per 100 parts by weight of said super absorbent polymer.

6. The super absorbent polymer composition according to claim 5, wherein the amount of said diphosphonic acid or a salt thereof is 0.001 to 10 parts by weight per 100 parts by weight of said super absorbent polymer.

7. An absorbent material for a sanitary article which comprises a super absorbent polymer composition according to any one of claims 1 to 6.